# EUROPEAN PATENT APPLICATION

(11) **EP 4 679 849 A1**
(43) Date of publication of application: **14.01.2026**
(21) Application number: 24188014.5
(22) Date of filing: 11.07.2024
(51) Int. Cl.: H04N 23/667, H04N 23/68

(54) **MOUNTABLE CAMERA DEVICE IMAGE STABILIZATION**

(71) Applicant: Axis AB, 223 69 Lund (SE)
(72) Inventor: Yuan, Song, 223 69 LUND (SE); Yang, Fangfang, 223 69 LUND (SE)
(74) Representative: AWA Sweden AB

(57) **Abstract**

The present disclosure relates to a mountable camera device, comprising: an image capturing unit for capturing a sequence of images, the image capturing unit comprising at least a lens and an image sensor; a vibration sensor for measuring camera vibrations; an optical image stabilization mechanism for physically compensating for the camera vibrations by physically moving the lens and/or the image sensor; electronic image stabilization circuitry for digitally compensating for the camera vibrations by image processing; and processing circuitry configured to select between the optical image stabilization mechanism and the electronic image stabilization circuitry by comparing the camera vibrations against a predefined stabilization margin and/or based on a location of an object of interest in the sequence of images. The disclosure further relates to a method for controlling a mountable camera device having optical image stabilization capabilities and electronic image stabilization capabilities.

## Description

The present disclosure relates to a camera device with image stabilization. The disclosure further relates to a method for controlling a mountable camera device having image stabilization capabilities.

### Background

Electronic Image Stabilization (EIS) and Optical Image Stabilization (OIS) are two prominent technologies used in modern mountable camera devices to reduce the effects of camera vibrations and movement, thereby enhancing image quality. EIS relies on an on-board sensor, typically a gyroscope sensor, and related image transformation acceleration on the processing chip to digitally compensate for camera vibrations. This method is advantageous due to its lower cost and reduced power consumption, as it does not require additional mechanical components. However, EIS has inherent limitations, such as a limited stabilization margin.

On the other hand, OIS employs mechanical components to physically move the lens and/or image sensor in response to detected camera vibrations. This method allows for more significant stabilization. The inclusion of mechanical components, however, makes OIS more expensive and power-intensive compared to EIS. Additionally, the mechanical components in OIS can wear out faster, especially if activated continuously over extended periods. This mechanical wear and tear pose a significant drawback, particularly for applications requiring prolonged or intensive use.

Given these limitations, current mountable camera devices must balance between the cost and power efficiency of EIS and the superior stabilization capabilities of OIS. Neither technology alone can provide an optimal solution for all scenarios, particularly in environments with varying degrees of camera vibrations. Users are often forced to compromise on either the stability of their images or the longevity and cost-effectiveness of their camera equipment. This compromise is especially evident in professional settings where high-quality image stabilization is critical, yet the operational costs and equipment durability must also be considered.

It is therefore an objective of the present disclosure to provide an improved mountable camera device that integrates both electronic and optical image stabilization technologies. How to best combine electronic and optical image stabilization technologies remains a challenge.

### Summary

The present disclosure relates to a mountable camera device, comprising:
an image capturing unit for capturing a sequence of images, the image capturing unit comprising at least a lens and an image sensor;
a vibration sensor for measuring camera vibrations;
an optical image stabilization mechanism for physically compensating for the camera vibrations by physically moving the lens and/or the image sensor;
electronic image stabilization circuitry for digitally compensating for the camera vibrations by image processing; and
processing circuitry configured to select between the optical image stabilization mechanism and the electronic image stabilization circuitry by comparing the camera vibrations against a predefined stabilization margin and/or based on a location of an object of interest in the sequence of images.

The combination of optical and electronic image stabilization in the proposed camera device offers significant technical advantages. By integrating both stabilization mechanisms, the device can dynamically select the most effective method based on real-time measurements of camera vibrations. This hybrid approach allows the camera to optimize its stabilization performance according to the specific conditions it encounters, ensuring high-quality image capture across a wide range of environments. The vibration sensor measures the camera vibrations. For example, when camera vibrations are within the manageable range of electronic image stabilization, the device can prioritize this method to conserve power and reduce mechanical wear. Conversely, in situations where vibrations exceed the capabilities of electronic stabilization, the device can switch to optical stabilization for more effective compensation.

The processing circuitry's ability to compare measured camera vibrations against a predefined stabilization margin or determine the location of an object of interest within the image sequence enhances the device's adaptability and precision and, at the same time, extends the operational life of the camera by minimizing reliance on mechanical components. This capability ensures that the most appropriate stabilization method is selected based on the actual dynamics of the scene, providing more tailored and effective stabilization.

The proposed method for controlling a mountable camera device involves acquiring a sequence of images, measuring camera vibrations, and selecting between compensating for these vibrations either by physically moving the lens and/or image sensor or by digitally processing the images. This selection is based on comparing the measured vibrations against a predefined stabilization margin and/or the location of an object of interest in the images. This method ensures that the camera can effectively adapt to varying conditions, providing stable and high-quality video capture.

The vibration sensor may include a gyroscope and/or an accelerometer, which can measure angular motion between consecutive images. The electronic image stabilization circuitry can compensate for vibrations by shifting rows or columns in the images, and the predefined stabilization margin might correspond to a cropping margin or an empty margin in the images for digital compensation. The processing circuitry may select optical stabilization for vibrations exceeding the predefined margin and electronic stabilization for those within it, or a combination of both methods for optimal performance.

The device's processing circuitry can also identify and determine the location of an object of interest, which influences the choice of stabilization method. For instance, if the object is within a predefined area unaffected by added empty spaces when using electronic stabilization, the device may prioritize digital compensation. Alternatively, if the object overlaps with the stabilization margin, the device might opt for optical stabilization.

The disclosure further relates to a method for controlling a mountable camera device having optical image stabilization capabilities and electronic image stabilization capabilities, the method comprising:
acquiring a sequence of images of a video from the mountable camera device;
measuring camera vibrations of the mountable camera device;
selecting between:
   compensating for the camera vibrations by physically moving a lens and/or an image sensor of the mountable camera device; and
   digitally compensating for the camera vibrations by image processing,
by comparing the camera vibrations against a predefined stabilization margin and/or based on a location of an object of interest in the sequence of images.

A person skilled in the art will recognize that the presently disclosed method for controlling a mountable camera device having optical image stabilization capabilities and electronic image stabilization capabilities may be performed using any embodiment of the presently disclosed mountable camera device, and vice versa.

### Description of drawings

Various embodiments are described hereinafter with reference to the drawings. The drawings are examples of embodiments and are intended to illustrate some of the features of the presently disclosed mountable camera device and method for controlling a mountable camera device, and are not limiting for the present invention.
Fig. 1 shows an embodiment of the presently disclosed mountable camera device.
Fig. 2 shows an illustration of an image with a stabilization margin and possible field of view.
Fig. 3 shows an example of an image comprising an object of interest in a predefined analysis area.
Fig. 4A and 4B show examples of images comprising an object of interest and perimeter crosslines.
Fig. 5 shows an example of empty spaces added in some lines of an image when using electronic image stabilization.
Fig. 6 shows a flow chart of a method according to an embodiment of the presently disclosed method for controlling a mountable camera device having optical image stabilization capabilities and electronic image stabilization capabilities.

### Detailed description

The present disclosure relates to a mountable camera device, comprising:
an image capturing unit for capturing a sequence of images, the image capturing unit comprising at least a lens and an image sensor;
a vibration sensor for measuring camera vibrations;
an optical image stabilization mechanism for physically compensating for the camera vibrations by physically moving the lens and/or the image sensor;
electronic image stabilization circuitry for digitally compensating for the camera vibrations by image processing; and processing circuitry configured to select between the optical image stabilization mechanism and the electronic image stabilization circuitry by comparing the camera vibrations against a predefined stabilization margin and/or based on a location of an object of interest in the sequence of images.

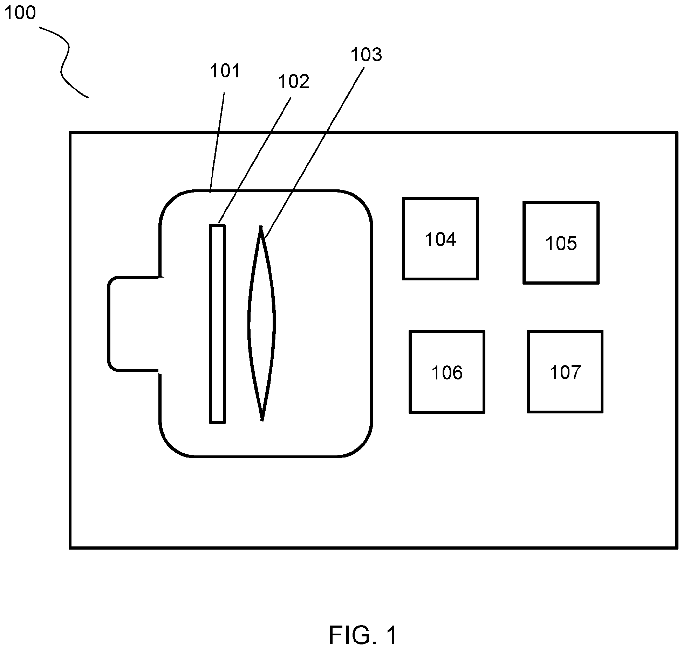

Fig. 1 shows an embodiment of the presently disclosed mountable camera device 100 comprising: an image capturing unit 101 comprising a lens 103 and an image sensor 102. The mountable camera device 100 in fig. 1 further comprises a vibration sensor 104, an optical image stabilization mechanism 105, electronic image stabilization circuitry 106 and processing circuitry 107.

The mountable camera device described in the present disclosure can be implemented in various forms to suit different applications and environments.

As an example, the mountable camera device described in the present disclosure can be mounted on various surfaces and structures, including fixed structures, and including, for example, a bar, stick, or a building. As an example, the camera device can be designed with a universal mounting system that includes adjustable clamps or brackets. These components can securely attach the device to cylindrical objects such as bars or sticks, making it ideal for use in action sports, vlogging, or other dynamic environments where handheld or pole-mounted cameras are commonly used. Generally, a person skilled in the art would know how to attach or mount a camera, such as a surveillance camera to fixed structures.

For mounting on buildings or other stationary structures, the camera device may feature robust mounting plates or screw-based fixtures. These can be used to securely attach the device to walls, ceilings, or other surfaces, providing stable and reliable performance in surveillance, construction monitoring, or outdoor security applications. The housing of the camera device in this scenario could be weatherproof and dust-resistant, ensuring it withstands harsh environmental conditions over extended periods.

Additionally, magnetic mounts can be an option for temporary installations on metallic surfaces, offering quick and easy attachment and detachment. This type of mounting system is particularly useful for industrial inspections, maintenance checks, or any application where the camera needs to be frequently relocated or adjusted.

In one embodiment, the mountable camera device may be integrated into more robust housing designed for industrial or security applications. This variation could include additional features such as weatherproofing, dust resistance, and reinforced casings to ensure reliable operation in harsh conditions. Such a design would be beneficial for surveillance systems, outdoor monitoring, and other scenarios where environmental exposure is a concern.

Additionally, the processing circuitry within the camera device may be designed to support various computational capabilities and connectivity options, including, but not restricted to, Ethernet and Power over Ethernet (PoE) connections and communication equipment. In one embodiment, the processing unit might include advanced image processing algorithms and machine learning capabilities to improve stabilization performance and adapt to different filming conditions automatically. Connectivity options could encompass wireless communication protocols such as Wi-Fi, Bluetooth, or cellular networks, enabling remote control, real-time video streaming, and seamless integration with other devices or systems.

### Optical image stabilization (OIS)

The optical image stabilization mechanism in the mountable camera device is designed to physically compensate for camera vibrations by adjusting the position of the lens and/or image sensor. This technology can reduce motion blur and maintaining image clarity, especially in environments with significant or unpredictable movement.

The term OIS within the context of the present disclosure shall be interpreted broadly to include adjustment of the lens or the image sensor, or a combination. The adjustment of the position of the image sensor is usually referred to as Sensor image stabilization (SIS), which shall be seen as a variant that falls under OIS in the present context. The technology is otherwise very similar to adjustment of the position of the lens.

In one embodiment, the OIS mechanism may include a set of gyroscopes and actuators. The gyroscopes detect the angular motion of the camera, providing real-time data on its movements. This information is then processed by the camera's processing circuitry, which calculates the necessary adjustments to counteract the detected vibrations. The actuators, which may be based on piezoelectric or electromagnetic principles, move the lens or sensor accordingly, ensuring that the image remains stable despite the camera's motion.

The OIS mechanism can be designed with different degrees of freedom. In a typical use case, at least two axis are needed to compensate for movement in a vertical and a horizontal direction (pitch and yaw). Multi-axis OIS having at least three axis, on the other hand, can address movements around three axis, including pitch, yaw, and roll, providing more comprehensive stabilization.

In another implementation, the OIS mechanism may involve lens shift technology, where the lens elements are moved to compensate for camera shake. Alternatively, sensor shift technology can be used, where the image sensor itself is moved to counteract vibrations. Some advanced systems may even combine both lens shift and sensor shift methods to maximize stabilization effectiveness.

The precision of the OIS mechanism is enhanced by sophisticated control algorithms that predict and react to camera movements with high accuracy. These algorithms can be based on a combination of gyroscopic data and other sensor inputs, such as accelerometers, to provide a more comprehensive understanding of the camera's motion. This predictive capability ensures that the OIS mechanism can quickly and effectively counteract vibrations, even in high-frequency or high-amplitude scenarios.

### Electronic image stabilization (EIS)

The electronic image stabilization circuitry in the mountable camera device is designed to digitally compensate for camera vibrations through image processing. This approach enhances the stability of the captured images and videos by correcting for unwanted motion artifacts in real-time, without the need for mechanical adjustments.

The EIS system may rely on one or more gyroscopes and/or one or more accelerometers. In one embodiment, the EIS system relies on a combination of sensors, such as gyroscopes and accelerometers, to measure the camera's movements. These sensors provide precise data on the direction and magnitude of vibrations. The data is then processed by the camera's processing circuitry, which calculates the necessary adjustments to the captured images to counteract the detected movements.

The electronic image stabilization circuitry for carrying out the electronic image stabilization may be any processing circuitry suitable for the task. It may, for example, be a separate unit or a part of the general processing circuitry.

The EIS system typically comprises image processing algorithms, which are responsible for digitally stabilizing the image. One common technique involves shifting the image frames based on the measured motion data. For instance, if the camera moves to the right, the EIS system shifts the image frames, possibly line by line, to the left by a corresponding amount, thereby neutralizing the effect of the movement. This process is typically carried out in real-time, ensuring that each frame is adjusted before it is displayed or recorded.

In another implementation, the EIS circuitry may use frame interpolation methods to smooth out the transitions between frames. This technique involves analyzing multiple frames to detect and predict motion patterns, allowing the system to create intermediate frames that provide a smoother visual experience. Frame interpolation is particularly useful in scenarios with rapid movements, as it helps to eliminate the jittery effect often seen in such situations.

The EIS system may also employ rolling shutter correction techniques. Rolling shutter artifacts occur when different parts of the image sensor capture the scene at slightly different times, leading to distortions in fast-moving scenes. The EIS circuitry can detect and correct these distortions by aligning the captured frames based on the sensor's readout timing, resulting in a more stable and accurate representation of the scene.

The EIS circuitry can be configured to work in conjunction with other image processing functions, such as noise reduction, exposure control, and color correction. By integrating these functions, the system ensures that the stabilization process does not negatively impact the overall image quality. For example, to some extent the EIS system can be designed to preserve the sharpness and clarity of the stabilized images, even when significant adjustments are made to compensate for vibrations.

In one embodiment, the EIS system includes machine learning algorithms that adapt to different filming conditions and improve over time. These algorithms analyze patterns in the camera's movements and the resulting image data to optimize the stabilization process. By continuously learning from new data, the EIS system can enhance its performance and provide more accurate stabilization in a wide range of scenarios.

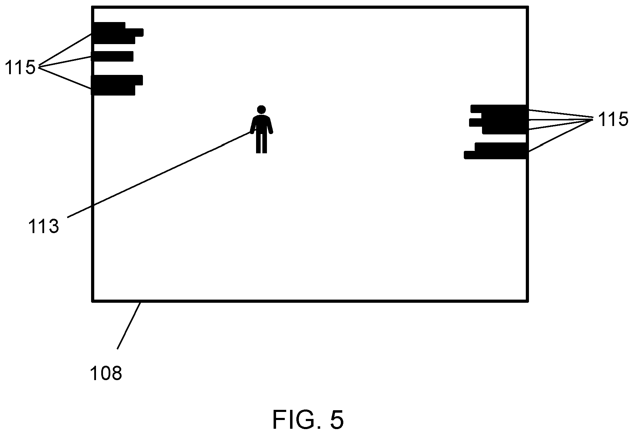

The mountable camera device described in the present disclosure includes electronic image stabilization (EIS) circuitry designed to compensate for camera vibrations by digitally processing the captured images. In one embodiment the vibrations are compensated for by shifting one or more rows or columns in at least one image of the sequence of images. For example, the image can be thought of as a number of rows. The electronic image stabilization can then render the image one row at a time. For each row, horizontal compensation of the vibrations can be done. This can be seen as empty or black spaces. Fig. 5 shows an example of empty spaces 115 added in some lines of an image 108 when using electronic image stabilization.

In one embodiment, the EIS circuitry detects camera vibrations using data from the vibration sensors, such as gyroscopes and accelerometers. Based on this data, the EIS system determines the direction and magnitude of the camera's movement. Once the movement is quantified, the EIS circuitry adjusts the position of the captured image frames to counteract this movement.

The adjustment process may involve shifting the image content horizontally or vertically by moving rows or columns within the image. For instance, if the camera experiences a slight shake to the left, the EIS system compensates by shifting the image to the right. This shift realigns the image content with the original intended frame, thereby reducing the effects of the vibration.

Shifting rows or columns within an image can be achieved through real-time image processing algorithms. These algorithms analyze consecutive frames to detect misalignments caused by vibrations and apply the necessary shifts to correct them. This process is typically performed on a frame-by-frame basis, ensuring that each image in the sequence is stabilized before being displayed or recorded.

### Vibration sensor(s)

The mountable camera device described in the present disclosure includes one or more vibration sensors which may comprise one or more gyroscopes and/or one or more accelerometers. These sensors provide the necessary data for both the optical image stabilization (OIS) and electronic image stabilization (EIS) systems.

The one or more vibration sensors may be configured to measure angular motion of the mountable camera between consecutive images of the sequence of images.

In one embodiment, the vibration sensor includes at least one gyroscope. A gyroscope measures angular velocity, which refers to the rate of rotation around the camera's axes. By detecting how quickly and in which direction the camera is rotating, the gyroscope provides precise information about the camera's orientation and movements. This data is needed for OIS systems, as it allows the actuators to make precise adjustments to the lens or image sensor to counteract rotational vibrations. For EIS systems, gyroscopic data helps in digitally aligning the image frames to correct for rotational motion.

Additionally, the vibration sensor may include an accelerometer. An accelerometer measures linear acceleration, which refers to the rate of change of velocity along the camera's linear axes (x, y, and z directions). This sensor detects movements such as tilting, panning, and shaking, providing comprehensive data about the camera's motion. The accelerometer's data complements the gyroscopic data by capturing both rotational and translational movements, offering a more complete picture of the camera's behaviour. For OIS, this means that both rotational and linear vibrations can be physically compensated for by moving the lens or image sensor accordingly. For EIS, the accelerometer helps in making precise digital corrections to stabilize the image.

A person skilled in the art would know how to implement suitable vibrations sensors. For example, the gyroscope and accelerometer can be implemented using Micro-Electro-Mechanical Systems (MEMS) technology, which offers high precision in a compact form factor. MEMS sensors are well-suited for mountable camera devices due to their small size, low power consumption, and durability.

### Selection of image stabilization

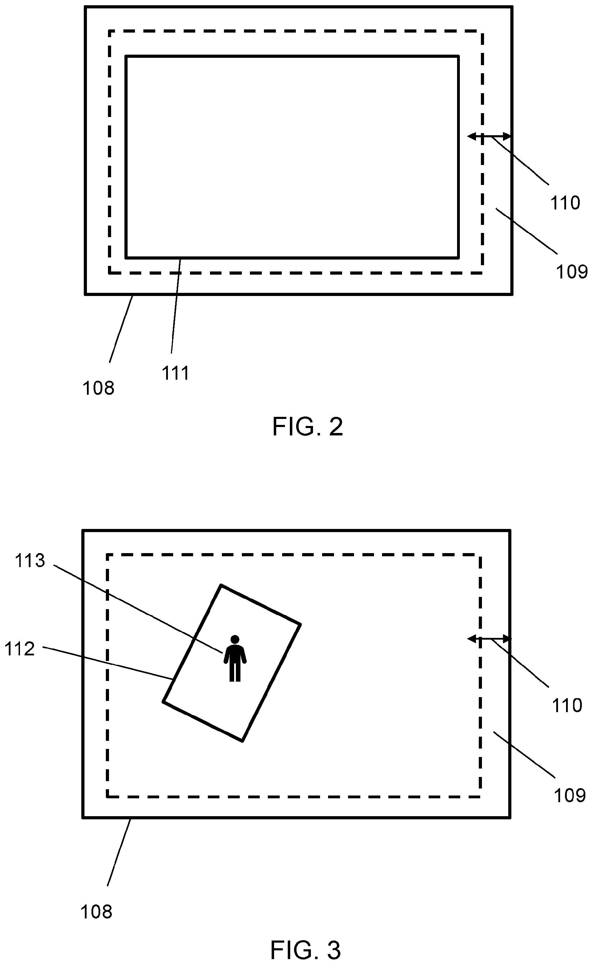

The stabilization margin in the context of the mountable camera device can be thought of as area or margin inside the original outer image frame. Fig. 2 illustrates the concept. In fig. 2 there is an image 108, which is an image of the sequence of images. The image 108 has a stabilization margin 109. The arrow 110 denotes an amplitude of a camera vibration translated into horizontal movement of pixels, typically for an entire row. An example of a field of view is shown as a dotted line in fig. 2. The inner line 111 can be seen as an analysis area which is not affected by added empty spaces of the sequence of images when using the electronic image stabilization circuitry.

In one embodiment, the processing circuitry is configured to select to use the optical image stabilization mechanism if the camera vibrations have an amplitude greater than the predefined stabilization margin and select to use the electronic image stabilization circuitry or a combination of the electronic image stabilization circuitry and the optical image stabilization mechanism if the camera vibrations have an amplitude less than the predefined stabilization margin.

The stabilization margin may correspond to a cropping margin or an empty margin in the sequence of images for digital compensation of the camera vibrations. When the camera captures an image, it can be seen as including extra content around the edges beyond what is intended for the final frame. This extra content can be said to form the cropping margin. During the stabilization process, if the camera moves or shakes, the EIS circuitry can adjust the position of the main image within this margin to counteract the movement. By shifting the image content horizontally or vertically within the cropping margin, the system maintains a stable and centered final image.

The predefined stabilization margin may be defined as a rotational angle of the mountable camera device selected from the range of 1-30% of the camera field of view, e.g. about 20 % of the horizontal field of view.

The mountable camera device described in the present disclosure may include processing circuitry that is configured to select the most appropriate stabilization method based on the amplitude of detected camera vibrations relative to a predefined stabilization margin. This functionality allows the camera device to optimize image stabilization by dynamically choosing between optical image stabilization (OIS), electronic image stabilization (EIS), or a combination of both, depending on the intensity of the vibrations.

In one embodiment, the processing circuitry continuously receives data from the vibration sensors, such as gyroscopes and accelerometers, to assess the amplitude of the camera's movements. The amplitude refers to the magnitude of the vibrations, which can vary from small, subtle movements to larger, more pronounced shifts. The amplitude can be translated to a distance on the image.

When the detected vibrations have an amplitude greater than the predefined stabilization margin, the processing circuitry may be configured to select the OIS mechanism. The predefined stabilization margin acts as a threshold level; if the vibrations exceed this threshold, it indicates that the movements are too significant for EIS alone to handle effectively. OIS, which involves physically moving the lens and/or image sensor, is more capable of compensating for larger amplitude vibrations because it directly counteracts the camera's motion through mechanical adjustments. This method ensures that the image remains stable even during substantial movements, providing superior stabilization in high-vibration scenarios.

Conversely, if the detected vibrations have an amplitude less than or equal to the predefined stabilization margin, the processing circuitry selects to use the EIS circuitry or a combination of both EIS and OIS. For smaller amplitude vibrations, digital compensation through EIS may be sufficient. EIS adjusts the image by shifting rows or columns within the frame, effectively stabilizing the image without the need for mechanical movement. This method is advantageous in conserving power and reducing mechanical wear on the OIS components, thus extending the overall lifespan of the camera device.

The processing circuitry may be configured to identify the object of interest and determine the location of the object of the interest. As would be understood by a person skilled in the art this can be done using various image processing and computer vision techniques.

The image processing and computer vision techniques may use feature detection algorithms to identify the object of interest. Feature detection involves analyzing the image to find distinctive points or patterns, such as edges, corners, or textures, that can be used to recognize and track objects. Algorithms like the Harris corner detector, Scale-Invariant Feature Transform (SIFT), or Speeded-Up Robust Features (SURF) can be employed to identify these features. Once detected, the system can match them across consecutive frames to track the object's movement and determine its location within the image.

Another approach involves using object recognition techniques, which rely on machine learning models trained to recognize specific objects. These models can be based on convolutional neural networks (CNNs), which are particularly effective for image classification and object detection tasks. The processing circuitry can be equipped with a pre-trained CNN model, such as YOLO (You Only Look Once), SSD (Single Shot MultiBox Detector), or Faster R-CNN, which can accurately identify and locate objects within the frame.

In some implementations, the processing circuitry may use motion detection algorithms to identify objects of interest. This method involves analyzing the difference between consecutive frames to detect moving objects. Techniques such as background subtraction, optical flow, or frame differencing can be used to identify regions of the image that contain motion. These regions are then analyzed to determine if they correspond to objects of interest. This approach is particularly useful in dynamic environments where the object of interest is typically in motion, such as in sports or surveillance applications.

The processing circuitry can also employ advanced tracking algorithms to maintain a consistent lock on the object of interest once it has been identified. Methods like the Kalman filter, particle filter, or correlation-based trackers can predict the object's movement and update its location in real-time.

More specifically, the processing circuitry may be configured to determine the location of the object of interest in relation to the stabilization margin or to a predefined area or to a perimeter crossline.

In one embodiment, the processing circuitry is configured to select the EIS circuitry if the object of interest is within a predefined analysis area that is located such that it is not affected by added empty spaces of the sequence of images when using EIS for digitally compensating for camera vibrations. This predefined analysis area may be, for example, an area in which all or specific individuals may not linger without a legitimate reason. In such an application, the processing circuitry may measure the time in which the object is in the area. If the time exceeds a predefined time threshold, a loitering alert can be triggered. By selecting EIS in these situations, the system can leverage the advantages of digital stabilization, such as reduced mechanical wear and power consumption, while ensuring that the object of interest remains clear and stable within the image frame.

Additionally, the processing circuitry can be configured to select EIS if the object of interest is within an area inside the stabilization margin. The stabilization margin, as previously described, is a buffer zone around the edges of the captured images used for digital compensation. If the object of interest is located within this margin, it indicates that there is sufficient space around the object for the EIS system to make necessary adjustments without compromising the visibility or clarity of the object. In such cases, the processing circuitry can prioritize EIS to maintain stabilization efficiency and prolong the lifespan of the OIS components.

In the active mode, the predefined stabilization margin may be defined as a rotational angle of the mountable camera device selected from the range of 1-30% of the field of view. When the mountable camera device is in the passive mode, the predefined stabilization margin may be set to a value greater than in the active mode.

Conversely, the processing circuitry may be configured to select the OIS mechanism if the object of interest overlaps with the predefined stabilization margin. When the object of interest is near or within the stabilization margin, there is a higher risk that digital adjustments might push parts of the object out of the frame or affect its clarity. In these scenarios, using OIS, which involves physically moving the lens or image sensor, ensures that the entire scene, including the object of interest, remains stable and within the frame.

The mountable camera device described in the present disclosure may be implemented with configurable operational modes. Specifically, the device can operate in an active mode or a passive mode, each tailored to different use cases and operational needs.

In one embodiment, the mountable camera device is configurable in an active mode, wherein the device transmits a video stream in real-time. This mode is particularly useful in surveillance systems where immediate visual feedback is useful. For example, if a guard, operator, or other personnel have been alerted to an event or suspicious activity within the monitored area, the camera can be switched to active mode. In this mode, the live video feed is transmitted directly to the operator, allowing for real-time monitoring and quick decision-making. The active mode ensures that the operator receives up-to-date visual information, enabling them to respond promptly to any incidents.

The active mode may leverage both the optical image stabilization (OIS) and electronic image stabilization (EIS) systems to provide a stable and clear video stream. The processing circuitry can dynamically select the most appropriate stabilization method based on the detected camera vibrations and the location of objects of interest within the frame. For example, when the mountable camera device is in the active mode, the processing circuitry may be configured to select to use the optical image stabilization mechanism if the camera vibrations have an amplitude greater than the predefined stabilization margin and to select to use the electronic image stabilization circuitry if the camera vibrations have an amplitude less than the predefined stabilization margin.

Moreover, when the mountable camera device is in the active mode, the processing circuitry may be configured to select to use the optical image stabilization mechanism if the mountable camera device operates in a high dynamic range (HDR) mode. The HDR mode enhances image quality by capturing and combining multiple exposures to create images with a greater range of luminance levels. HDR mode is particularly beneficial in scenes with both very bright and very dark areas, as it helps to preserve detail in both the highlights and shadows, resulting in a more balanced and visually appealing image.

In another embodiment, the mountable camera device is configurable in a passive mode, wherein the device primarily analyzes video data rather than transmitting it in real-time. The passive mode is suitable for applications where continuous video streaming is not required, and the focus is on processing and analyzing the recorded footage. This mode can be used for post-event analysis, long-term monitoring, or automated surveillance tasks where real-time human intervention is not necessary.

In the passive mode, the camera device can use advanced video analytics to detect and track objects, identify patterns, and recognize events or anomalies within the captured footage. The processing circuitry may employ machine learning algorithms and other image processing techniques to analyze the video data efficiently.

When the camera device is in the passive mode, the processing circuitry may be configured to select EIS if the object of interest is within a predefined analysis area that is located impacted of added empty spaces in the sequence of images. EIS involves digitally compensating for camera vibrations by shifting rows or columns within the image frame. This digital adjustment can sometimes result in empty spaces or margins around the edges of the image. For an analysis area that does not intersect with these empty spaces, EIS can be used.

In one embodiment, the processing circuitry is configured to select EIS if the camera device is set to analyze video data only within a predefined analysis area, which is not affected by the empty spaces created during the digital compensation process of EIS. This configuration may be useful for tasks that involve tracking or analyzing specific regions of the frame, such as monitoring specific areas in a security system or focusing on particular zones in an industrial inspection process.

Fig. 3 shows an example of an image 108 comprising an object of interest 113 in a predefined analysis area 112. As can be seen, the predefined analysis area 112 does not overlap with the stabilization margin 109, and therefore EIS may be used.

The mountable camera device described in the present disclosure may include processing circuitry that enhances its image stabilization capabilities by intelligently responding to the movement of objects of interest within the captured scene. One such feature involves the detection of an object crossing a perimeter crossline and the corresponding adjustment of the stabilization method based on this movement.

In one embodiment, the processing circuitry is configured to detect if the object of interest crosses a perimeter crossline. A perimeter crossline is a virtual boundary defined within the camera's field of view, which can be set by the user or preconfigured based on the application's requirements. This crossline can be used to monitor specific areas within the scene, such as entry points in a security surveillance setup or critical zones in an industrial monitoring scenario.

When the object crosses the predefined crossline, the system registers this event and can trigger specific responses. This functionality is particularly useful for alerting operators to movements in critical areas or for automating responses to certain actions detected within the monitored environment.

Furthermore, the processing circuitry may be configured to select the optical image stabilization (OIS) mechanism if the perimeter crossline overlaps with the predefined stabilization margin. The predefined stabilization margin, as previously described, is a buffer zone around the edges of the captured images used for digital compensation by the electronic image stabilization (EIS) system. When the object of interest is detected near or within this margin, digital stabilization adjustments might risk pushing parts of the object out of the frame or affecting its clarity.

By selecting OIS in such situations, the camera device ensures more precise stabilization through physical adjustments of the lens or image sensor, maintaining the integrity of the image and keeping the object of interest fully visible and clear. OIS provides a mechanical approach to stabilization that does not rely on digital cropping or shifting, thus preserving the full field of view.

This selection process based on the detection of perimeter crossline crossings enhances the reliability and effectiveness of the camera's stabilization system. For example, in a security application, if a person crosses into a restricted area defined by the perimeter crossline, the camera can switch to OIS to ensure the best possible image quality for identifying the individual. Similarly, in an industrial setting, if machinery or equipment crosses into a critical operational zone, the camera can use OIS to provide clear and stable footage for monitoring or analysis.

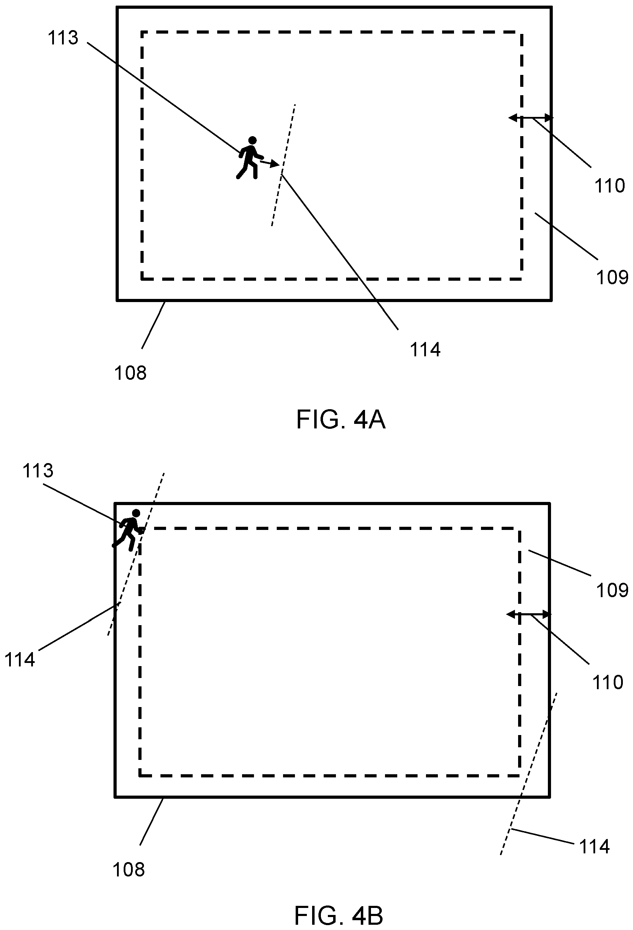

Fig. 4A and 4B show examples of images 108 comprising an object of interest 113 and perimeter crosslines 114. In fig. 4A the perimeter crosslines 114 does not overlap with the stabilization margin 109. In fig. 4B there are two perimeter crosslines 114 which both overlap with the stabilization margin 109.

The mountable camera device may comprise processing circuitry to carry out any of the disclosed processing steps. As would be understood by a person skilled in the art, the processing circuitry may be any suitable processing circuitry, such as a single processor or a multi-core/multiprocessor system, provided as part of, for example, a portable system, or as a separate part. The system may further comprise peripheral components, such as one or more memories, which may be used for storing instructions that can be executed by any of the processors. The one or more memories may include random access memory (RAM) and/or a read-only memory (ROM), or any suitable type of memory. The system may further comprise any of: internal and external network interfaces, input and/or output ports, modules for sending and receiving data wirelessly, communication interface that allows software and/or data to be transferred between the system and external devices.

The disclosure further relates to a method for controlling a mountable camera device having optical image stabilization capabilities and electronic image stabilization capabilities.

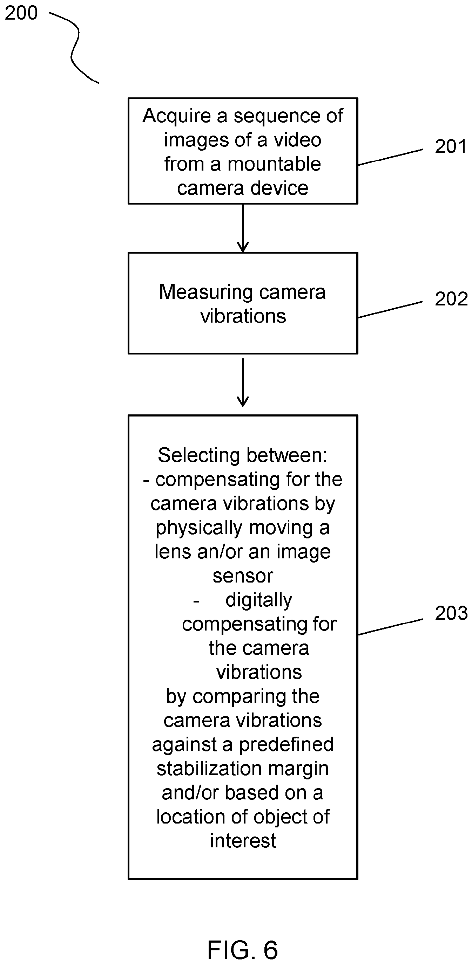

Fig. 6 shows a flow chart of a method 200 according to an embodiment of the presently disclosed method for controlling a mountable camera device having optical image stabilization capabilities and electronic image stabilization capabilities. The method may comprise the steps of: acquiring a sequence of images of a video from the mountable camera device (201); measuring camera vibrations of the mountable camera device (202); and selecting between: compensating for the camera vibrations by physically moving a lens and/or an image sensor of the mountable camera device; and digitally compensating for the camera vibrations by image processing, by comparing the camera vibrations against a predefined stabilization margin and/or based on a location of an object of interest in the sequence of images (203).

The present disclosure further relates to a computer program having instructions which, when executed by a computing device or computing system, cause the computing device or computing system to carry out the method for controlling a mountable camera. The computer program may be stored on any suitable type of storage media, such as non-transitory storage media

## Claims

1. A mountable camera device (100), comprising:
an image capturing unit (101) for capturing a sequence of images (108), the image capturing unit (101) comprising at least a lens (103) and an image sensor (102);
a vibration sensor (104) for measuring camera vibrations;
an optical image stabilization mechanism (105) for physically compensating for the camera vibrations by physically moving the lens (103) and/or the image sensor (102);
electronic image stabilization circuitry (106) for digitally compensating for the camera vibrations by image processing; and
processing circuitry (107) configured to select between the optical image stabilization mechanism (105) and the electronic image stabilization circuitry (106) by comparing the camera vibrations against a predefined stabilization margin (109) and/or based on a location of an object of interest (113) in the sequence of images (108).

2. The mountable camera device (100) according to any one of the preceding claims, wherein the predefined stabilization margin (109) corresponds to a cropping margin or an empty margin in the sequence of images (108) for digital compensation of the camera vibrations.

3. The mountable camera device (100) according to any one of the preceding claims, wherein the processing circuitry (107) is configured to select to use the optical image stabilization mechanism (105) if the camera vibrations have an amplitude greater than the predefined stabilization margin (109) and select to use the electronic image stabilization circuitry (106) or a combination of the electronic image stabilization circuitry (106) and the optical image stabilization mechanism (105) if the camera vibrations have an amplitude less than the predefined stabilization margin (109).

4. The mountable camera device (100) according to any one of the preceding claims, wherein the processing circuitry (107) is configured to identify the object of interest (113) and determine the location of the object of the interest (113).

5. The mountable camera device (100) according to claim 4, wherein the processing circuitry (107) is configured to determine the location of the object of interest (113) in relation to the stabilization margin (109) or to a predefined area or to a perimeter crossline (114).

6. The mountable camera device (100) according to any one of the preceding claims, wherein the processing circuitry (107) is configured to select to use the electronic image stabilization circuitry (106) if the object of interest (113) is within a predefined analysis area located such that it is not affected by added empty spaces of the sequence of images (108) when using the electronic image stabilization circuitry (106) for digitally compensating for the camera vibrations.

7. The mountable camera device (100) according to any one of the preceding claims, wherein the processing circuitry (107) is configured to select to use the electronic image stabilization circuitry (106) if the object of interest (113) is within an area inside of the stabilization margin (109).

8. The mountable camera device (100) according to any one of the preceding claims, wherein the processing circuitry (107) is configured to select to use the optical image stabilization mechanism (105) if the object of interest (113) overlaps with the predefined stabilization margin (109).

9. The mountable camera device (100) according to any one of the preceding claims, wherein the mountable camera device (100) is configurable in an active mode, wherein the mountable camera device (100) transmits a video stream, and further configurable in a passive mode, wherein the mountable camera device (100) analyzes video data.

10. The mountable camera device (100) according to claim 9, wherein, when the mountable camera device (100) is in the active mode, the processing circuitry (107) is configured to select to use the optical image stabilization mechanism (105) if the camera vibrations have an amplitude greater than the predefined stabilization margin (109) and to select to use the electronic image stabilization circuitry (106) if the camera vibrations have an amplitude less than the predefined stabilization margin (109).

11. The mountable camera device (100) according to any one of claims 9 to 10, wherein, when the mountable camera device (100) is in the active mode, the processing circuitry (107) is configured to select to use the optical image stabilization mechanism (105) if the mountable camera device (100) operates in a high dynamic range mode.

12. The mountable camera device (100) according to any one of claims 9 to 11, wherein, when the mountable camera device (100) is in the passive mode, the processing circuitry (107) is configured to select to use the electronic image stabilization circuitry (106) if the object of interest (113) is within a predefined analysis area located such that it is not affected by added empty spaces of the sequence of images (108) when using the electronic image stabilization circuitry (106) for digitally compensating for the camera vibrations.

13. The mountable camera device (100) according to any one of claims 9 to 12, when the mountable camera device (100) is in the active mode, the predefined stabilization margin (109) is defined as a rotational angle of the mountable camera device (100) and selected from the range of 1-30% of the field of view, and, when the mountable camera device (100) is in the passive mode, the predefined stabilization margin (109) is set to a value greater than in the active mode.

14. A method for controlling a mountable camera device (100) having optical image stabilization capabilities and electronic image stabilization capabilities (200), the method comprising:
acquiring (201) a sequence of images (108) of a video from the mountable camera device (100);
measuring (202) camera vibrations of the mountable camera device (100);
selecting between:
- compensating for the camera vibrations by physically moving a lens (103) and/or an image sensor (102) of the mountable camera device (100); and
- digitally compensating for the camera vibrations by image processing,
by comparing the camera vibrations against a predefined stabilization margin (109) and/or based on a location of an object of interest (113) in the sequence of images (203).

15. A computer program having instructions which, when executed by a computing device or computing system, cause the computing device or computing system to carry out the method for controlling a mountable camera according to claim 14.

## Amended claims

### Amended claims in accordance with Rule 137(2) EPC.

1. A mountable camera device (100), comprising:
an image capturing unit (101) for capturing a sequence of images (108), the image capturing unit (101) comprising at least a lens (103) and an image sensor (102);
a vibration sensor (104) for measuring camera vibrations;
an optical image stabilization mechanism (105) for physically compensating for the camera vibrations by physically moving the lens (103) and/or the image sensor (102);
electronic image stabilization circuitry (106) for digitally compensating for the camera vibrations by image processing; and
processing circuitry (107) configured to select between the optical image stabilization mechanism (105) and the electronic image stabilization circuitry (106) by comparing the camera vibrations against a predefined stabilization margin (109),
**characterized in that**
the predefined stabilization margin (109) corresponds to a cropping margin or an empty margin in the sequence of images (108) for digital compensation of the camera vibrations.

2. The mountable camera device (100) according to any one of the preceding claims, wherein the processing circuitry (107) is configured to select between the optical image stabilization mechanism (105) and the electronic image stabilization circuitry (106) based on a location of an object of interest (113) in the sequence of images (108).

3. The mountable camera device (100) according to any one of the preceding claims, wherein the processing circuitry (107) is configured to select to use the optical image stabilization mechanism (105) if the camera vibrations have an amplitude greater than the predefined stabilization margin (109) and select to use the electronic image stabilization circuitry (106) or a combination of the electronic image stabilization circuitry (106) and the optical image stabilization mechanism (105) if the camera vibrations have an amplitude less than the predefined stabilization margin (109).

4. The mountable camera device (100) according to any one of the preceding claims, wherein the processing circuitry (107) is configured to identify the object of interest (113) and determine the location of the object of the interest (113).

5. The mountable camera device (100) according to claim 4, wherein the processing circuitry (107) is configured to determine the location of the object of interest (113) in relation to the stabilization margin (109) or to a predefined area or to a perimeter crossline (114).

6. The mountable camera device (100) according to any one of the preceding claims, wherein the processing circuitry (107) is configured to select to use the electronic image stabilization circuitry (106) if the object of interest (113) is within a predefined analysis area located such that it is not affected by added empty spaces of the sequence of images (108) when using the electronic image stabilization circuitry (106) for digitally compensating for the camera vibrations.

7. The mountable camera device (100) according to any one of the preceding claims, wherein the processing circuitry (107) is configured to select to use the electronic image stabilization circuitry (106) if the object of interest (113) is within an area inside of the stabilization margin (109).

8. The mountable camera device (100) according to any one of the preceding claims, wherein the processing circuitry (107) is configured to select to use the optical image stabilization mechanism (105) if the object of interest (113) overlaps with the predefined stabilization margin (109).

9. The mountable camera device (100) according to any one of the preceding claims, wherein the mountable camera device (100) is configurable in an active mode, wherein the mountable camera device (100) transmits a video stream, and further configurable in a passive mode, wherein the mountable camera device (100) analyzes video data.

10. The mountable camera device (100) according to claim 9, wherein, when the mountable camera device (100) is in the active mode, the processing circuitry (107) is configured to select to use the optical image stabilization mechanism (105) if the camera vibrations have an amplitude greater than the predefined stabilization margin (109) and to select to use the electronic image stabilization circuitry (106) if the camera vibrations have an amplitude less than the predefined stabilization margin (109).

11. The mountable camera device (100) according to any one of claims 9 to 10, wherein, when the mountable camera device (100) is in the active mode, the processing circuitry (107) is configured to select to use the optical image stabilization mechanism (105) if the mountable camera device (100) operates in a high dynamic range mode.

12. The mountable camera device (100) according to any one of claims 9 to 11, wherein, when the mountable camera device (100) is in the passive mode, the processing circuitry (107) is configured to select to use the electronic image stabilization circuitry (106) if the object of interest (113) is within a predefined analysis area located such that it is not affected by added empty spaces of the sequence of images (108) when using the electronic image stabilization circuitry (106) for digitally compensating for the camera vibrations.

13. The mountable camera device (100) according to any one of claims 9 to 12, when the mountable camera device (100) is in the active mode, the predefined stabilization margin (109) is defined as a rotational angle of the mountable camera device (100) and selected from the range of 1-30% of the field of view, and, when the mountable camera device (100) is in the passive mode, the predefined stabilization margin (109) is set to a value greater than in the active mode.

14. A method for controlling a mountable camera device (100) having optical image stabilization capabilities and electronic image stabilization capabilities (200), the method comprising:
acquiring (201) a sequence of images (108) of a video from the mountable camera device (100);
measuring (202) camera vibrations of the mountable camera device (100);
selecting between:
- compensating for the camera vibrations by physically moving a lens (103) and/or an image sensor (102) of the mountable camera device (100); and
- digitally compensating for the camera vibrations by image processing,
by comparing the camera vibrations against a predefined stabilization margin (109),
**characterized in that**
the predefined stabilization margin (109) corresponds to a cropping margin or an empty margin in the sequence of images (108) for digital compensation of the camera vibrations.

15. A computer program having instructions which, when executed by a computing device or computing system, cause the computing device or computing system to carry out the method for controlling a mountable camera according to claim 14.
